Europäisches Patentamt

European Patent Office

Office européen des brevets

(19)

(11) Publication number: **0 261 695**
**B1**

# EUROPEAN PATENT SPECIFICATION

(45) Date of publication of the patent specification:
05.12.90

(51) Int. Cl.⁵: **B28D 1/08**, F16H 7/08

(21) Application number: 87114114.9

(22) Date of filing: 26.09.87

(54) Apparatus for driving and controlling wire in wire saw.

(30) Priority: 26.09.86 JP 225860/86

(43) Date of publication of application:
30.03.88 Bulletin 88/13

(45) Publication of the grant of the patent:
05.12.90 Bulletin 90/49

(84) Designated Contracting States:
DE FR

(56) References cited:
US-A- 3 155 087
US-A- 3 942 508
US-A- 4 368 647

SOVIET INVENTIONS ILLUSTRATED, section P, Q,
Woche 84/24, 25. Juli 1984, Derwent Publications Ltd.,
London, Q 64

(73) Proprietor: Kabushiki Kaisha Yasunaga Tekkosho, 3860,
Nakamachi Midorigaoka, Ueno-shi Mie-ken(JP)
Proprietor: YASUNAGA ENGINEERING KABUSHIKI
KAISHA, 4-1, Kamezawa 3-chome, Sumida-ku Tokyo(JP)

(72) Inventor: Kudo, Michio, 1203, Kami, Ageo-shi
Saitama-ken(JP)
Inventor: Miyanishi, Hideki, 5-7-60, Kikyogaoka,
Nabari-shi Mie-ken(JP)

(74) Representative: Masch, Karl Gerhard et al,
Patentanwälte Andrejewski, Honke & Partner
Theaterplatz 3 Postfach 10 02 54, D-4300 Essen 1(DE)

ACTORUM AG

## Description

The invention relates to a wire saw comprising a machine frame; a feed spool and a take-up spool respectively mounted on said machine frame for rotation between which a single continuous wire is extended; a plurality of guide rollers mounted on said machine frame in parallel to one another for rotation, around which said wire is wound a plurality of times to form a wire array which is reciprocally movable forward and backward for cutting a work piece to be urged thereto; means arranged between said spools and said wire array for absorbing wire slacks to be caused by said cutting movement of the wire array; and a reversible motor for driving one of said guide rollers to generate reciprocal movement of said wire array; said absorbing means being formed by two pairs of pulley assemblies around each pair of which a fresh wire run extending from said feed spool to said cutting wire array and a used wire run extending from said cutting wire array to said take-up spool are respectively wound a plurality of times corresponding to the number of pulleys forming respective assembly, one of said each pair of pulley assemblies being mounted on said machine frame for rotation, while the other pulley assembly of said each pair is adapted to be floatingly movable reciprocally towards and apart from the counterpart stationary pulley assembly for absorbing said slacks.

The wire saws of the type referred to above are in public knowledge, for instance according to US-A 3 841 297 and 3 942 508.

However, in the former the means for absorbing slacks is formed by a pair of pulley assemblies respectively mounted on a carriage at the opposite ends thereof for free rotation and other two pulley assemblies around which a fresh wire run extended from the wire feed spool to the wire array to be reciprocally moved for cutting and a used wire run extended from said cutting wire array to the take-up spool are respectively wound a plurality of times so as to form a pair of wire arrays for the fresh wire run and for the used wire run in the fashion of a block and tackle, whereby said carriage may be movable toward and apart from one of said other two pulley assemblies for absorbing slacks formed reciprocally in said fresh and used wire runs due to reciprocal movement for cutting of said wire array. At the opposite ends of the carriage moved to-and-fro, there are provided a pair of switches to be actuated by contacting with said carriage for reversing the direction of rotation of the motor for driving said cutting wire array.

Said wire saw is, however, not satisfactory in that since said slack absorbing means is in the form of the block and tackle like mechanism to be synchronized with the cutting wire array movement, the wire portion, above all the used and consequently worn wire portion is apt to be damaged or broken in the worst case curing pulling said mechanical absorbing means. This tendency is made larger as the number of wire wound around each pair of wire array is increased,

Different from the machine disclosed in the former U.S. Patent, the slack absorbing mechanism in the latter is driven not by the wire itself but by a driving shaft from the motor which is for driving the sawing wire array so that the disadvantage referred to above can be avoided. However, synchronization of said slack absorbing mechanism with the sawing wire array is made according to a complex mechanical gearings. The wear of various elements of said gearings causes adverse effects on reciprocal movement of the sawing wire array and rotation of the guide rollers therefor which adversely affects on precise cutting. Thus such gearings must be always in careful maintenance.

As well known to those skilled in the art, the guide rollers for the sawing wire array are worn by the wire applied with abrasive particle slurry so as to be inevitably reworked every after the lapse of some working time, whereby the diameter thereof is reduced little by little. Thus, concerned parts of the mechanical gearings for said synchronization must be replaced with those prepared in advance in order to keep precise working.

Furthermore, there are known from SU-A 1 043 391 means for tensioning a flexible element, comprising a pair of toothed racks each fixed to a tensioning roller and a pinion arranged between said two toothed racks to meshingly engage therewith and driven by a weight. But said tensioning means are not assigned for a wire saw.

Thus, it is an obtect to provide an improved wire saw capable of avoiding or overcoming the defects referred to above.

It is the other object of the invention to provide means for driving and controlling wire in the wire saw so as to synchronize the reciprocal movement of the sawing wire array and the reciprocal see-saw movement of the wire array for absorbing slacks caused by said sawing movement without necessity of said maintenance and exchange the concerned parts despite of inevitable reworking of the guide rollers of the sawing wire array.

Said objects and other advantageous effects can be attained according to the invention in that another reversible motor is provided so as to cause said reciprocal movement of said floating pulley assemblies; that a synchronous control circuit is provided so as to control and synchronize said two reversible motors according to informations on rotation pattern stored therein respectively through a pair of servo-driver means; and that said means for absorbing wire slacks comprises a pair of toothed racks each fixed to each of said floating pulley assemblies and a pinion arranged between said two toothed racks to meshingly engage therewith and driven by said second reversible motor so as to cause reciprocal up and down movement of said floating pulley assemblies.

The invention will be explained in more detail in reference to the accompanying drawings, in which;

Fig. 1 is a schematic respective view arrangement of essential parts of an embodiment of the wire saw io which the improvement of the invention is applied,

Fig. 2 is a diagram explaining operation thereof,

Fig. 3 is a diagram illustrating patterns of reciprocal movement of the slacks absorbing means or of revolution of the reversible servo-motor for driving thereof, and

Fig. 4 is a diagram illustrating patterns of reciprocal movement of the sawing wire array or of revolution of the other reversible servo-motor for driving thereof.

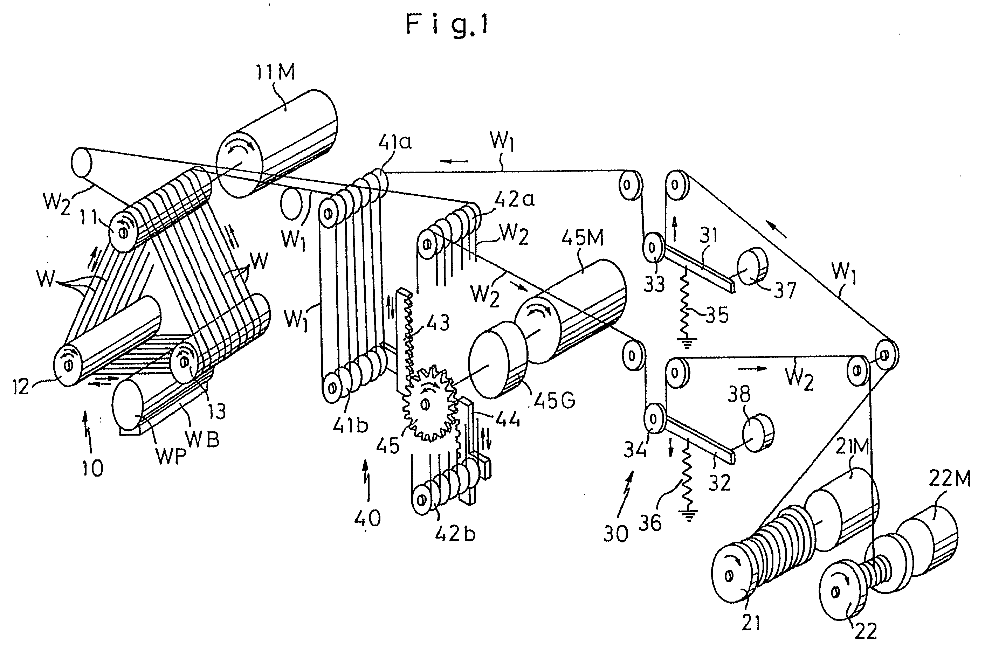

In Fig. 1, a wire array represented generally by 10 is formed by a single continuous wire W wound around a plurality of ( "three" in the illustrated embodiment) guide rollers 11, 12 and 13, which are parallelly arranged to one another and mounted on a machine frame not shown for rotation, a number of times ( "nine" times in the illustrated embodiment) with leaving a desired space between every adjacent runs of the wire W. Said guide roller 11 is drivingly rotated by a reversible servo-motor 11M so that the wire array for sawing is formed by nine runs of wire extended between the other two freely rotatable guide rollers 12 and 13. When a work piece WP set on a work bed WB is urged against said; sawing wire array reciprocally moved by said reversible motor 11M for sawing with applying abrasive powder slurry thereto, said work piece WP is cut to be in ten pieces respectively of desired thickness. One end of the single continuous wire wound around said guide rollers is started from a feed spool 21, while the other end thereof is received by a take-up spool 22. Said spools 21 and 22 are driven by respective servo-motors 21M and 22M to rotate respectively in such a direction as to feed a new wire portion $W_1$ little by little to the sawing wire array 10 and take-up an old wire portion $W_2$ correspondingly from said wire array 10 to maintain a constant tension along the wire W for assuring efficient and precise cutting.

In the way of new wire run $W_1$ and old wire run $W_2$, there is provided respectively means for keeping tension in the wire W, represented generally by 30 which may be formed e.g. by an arm lever 31 (32) pivoted on the machine frame at one end thereof for angular movement and having a pulley 33 (34) mounted at the other end for free rotation, which is arranged between a pair of guide pulleys respectively mounted also for free rotation on the machine frame not shown, said arm lever being urged by spring means 35 (36) so that said floating pulley 33 (34) may move apart from said pair of guide pulleys, Thus, the wire run $W_1$ ($W_2$) extending around one of said pair of guide pulleys, said floating pulley 33 (34) and then the other guide pulley is kept in tension owing to the force of said spring means 35 (36) urging the arm lever 31 (32) and consequently said floating pulley 33 (34) mounted thereon, There is provided a detector 37 (38) so as to detect the angular movement of said arm lever 31 (32).

It goes without saying that in order to cause renewal of the single continuous wire Win the sawing wire array 10, or in other words in order to allow feeding new wire portion $W_1$ little by little thereinto and consequently taking-up used wire portion $W_2$ therefrom, the reciprocal forward and backward movement of the wire array 10 and consequently the revolution of the reversible motor 11M in one direction and in the other direction must be made differential. In the illustrated embodiment, when the servo-motor 11M is rotated in the counterclockwise direction, the wire portion $W_1$ is pulled into the wire array 10. Thus, the motor 11M must be energized so as to rotate more in the counterclockwise direction than rotation in the clockwise direction.

Since the new wire portion $W_1$ is pulled into the wire array 10 little by little in every reciprocal movement thereof as referred to above, the floating pulley 33 is pulled up in Fig. 1 against the force of the spring 35 and the detector 37 detects the corresponding angular movement of the arm lever 31. Similarly the detector 38 detects the angular movement of the arm lever 32 in the reverse direction. The servo-motors 21M and 22M are energized in reply to such detections to feed a fresh wire run $W_1$ and take-up a used wire run $W_2$ in order to keep the single continuous wire in stable tension.

When the sawing array 10 is reciprocally moved, there is inevitably caused reciprocal slackening of the wire runs $W_1$ and $W_2$ which must be absorbed or compensated in order to keep the single wire in stable tension. In the way of new wire run $W_1$ and old wire run $W_2$, there is provided means for absorbing such slack reciprocally caused in wire runs $W_1$ and $W_2$ represented generally by 40, which is formed according to the invention by a pair of pulley assemblies, consisting of six pulleys in the illustrated embodiment, 41a, 41b (42a, 42b), a toothed rack 43 (44) mounted on the latter pulley assembly, and a pinion 45 arranged between said toothed racks 43, 44 to meshingly engage therewith and driven by a reversible servo-motor 45M via a reduction gearing 45G. Said pulley assembly 41a (42a) is mounted on the machine frame for free rotation, but the other pulley assembly 41b (42b) is floatingly movable towards or apart from the counterpart stationary pulley assembly 41a (42a) owing to wire $W_1$ ($W_2$) extending around said pair of pulley assemblies, six times in the illustrated embodiment, so as to form a wire array therebetween. It will be preferable that each floating pulley assembly 41b (42b) is engaged with a pair of guide slots formed in the machine frame not shown at the opposite ends thereof. Thus, when said motor 45M is energized to rotate the pinion 45 in the counterclockwise direction in Fig. 1, said toothed rack 43 and consequently said floating pulley assembly 41b is moved apart from the stationary pulley assembly 41a so as to absorb slack of new wire run $W_1$ which is caused by the movement of the sawing wire array formed between the guide rollers 12 and 13 to the right side in Fig. 1, but the toothed rack 44 and consequently said floating pulley assembly 42b is moved, towards the counterpart stationary pulley assembly 42a so as to allow a corresponding length of the old wire portion $W_2$ to be pulled into the sawing wire array 10 for assuring stable and uniform tension in the single continuous wire W.

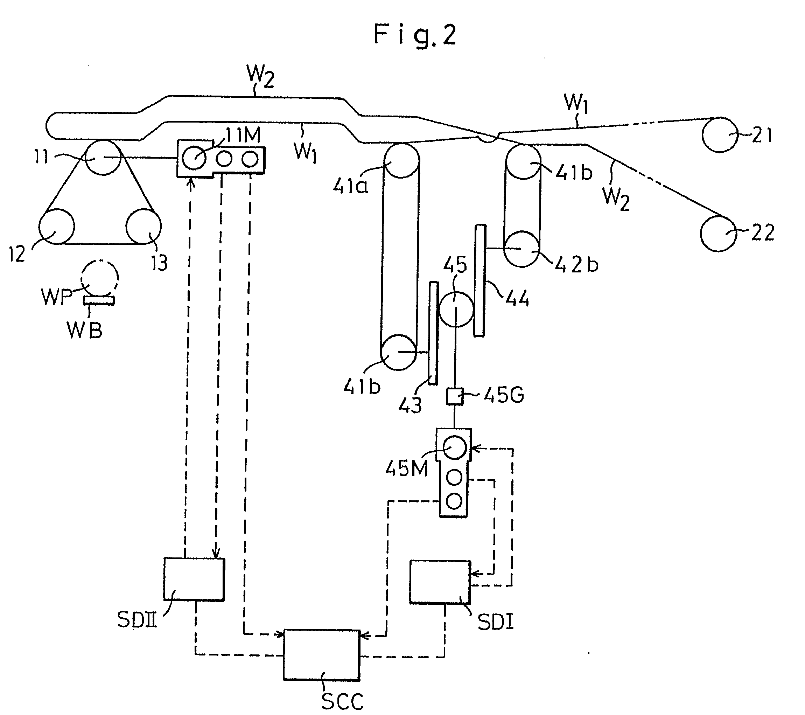

Since the reversible servo-motor 11M for reciprocatingly driving the sawing wire array 10 forward and backward and the reversible servo-motor 45M for driving the means 40 for absorbing the reciprocal slack of the wire portions $W_1$ and $W_2$ are separately provided according to the invention different from the prior art in which the both is mechanically synchronized, a system for controlling and synchronizedly energizing said two motors must be provided which is illustrated in Fig. 2.

In Fig. 2 wherein the same member is represented by the same referential numeral, a synchronous control circuit SCC gives commands through a servo-driver SDI to said motor 45M and through another servo-driver SDII to said motor 11M.

The motor 45M must be energized to reciprocally rotate in the opposite directions so as to move the toothed racks 43 (44) and consequently the floating pulley assembly 41b (42b) reciprocally towards and apart from the stationary pulley assembly 41a (42a) synchronously with the forward and backward movement of the sawing wire array 10 which is caused by the motor 11M.

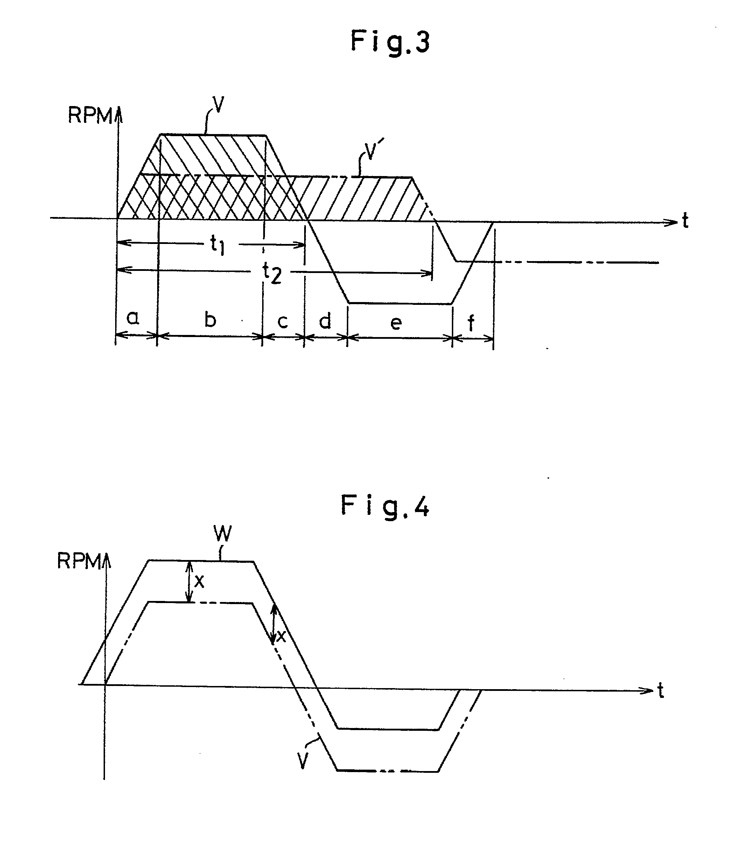

The command to be given to the motor 45M is to be as follows. In reference to Fig. 3 in which the ordinate represents revolution speed of the motor 45M per time (t) which corresponds to the speed of the upward and downward movement of the floating pulley assemblies 41b, 42b, and consequently a curve V (or V') represents movement pattern of the motor 45M and consequently of said floating pulley assemblies, areas (a), (b), (c), (d), (e) and (f) respectively represents "accelerated upward movement", "constant speed upward movement", "decelerated upward movement", "accelerated downward movement", "constant speed downward movement" and "decelerated downward movement" of the floating pulley assembly 41b (42b) to complete one cycle movement pattern V, in respect of which (t1) is a half cycle thereof. In other words, the motor 45M is energized to start accelerated rotation in one direction (a), to rotate at a constant speed (b), to begin decelerated rotation to stop (c), to start accelerated rotation in the opposite direction (d), to rotate at a constant speed (e), and to begin decelerated rotation to stop (f). The reciprocal upward and downward movement of the floating pulley assembly 41b (42b) or the reciprocal revolution of the motor 45M in opposite directions is not limited to such pattern V, which may be replaced with another movement pattern V' wherein the movement of the floating pulley assembly or the revolution of the motor at a constant speed is longer than that in the pattern V. The half cycle (t1) for the pattern V is shorter than the half cycle (t2) for the pattern V'. The hatched area of the curve V, however, must be equal to the hatched area of the curve V' because said hatched area means a length of wire $W_1$ or $W_2$ to be absorbed in said zone 40 which corresponds to the stroke of the shifted wire array 10.

If the quantity of the wire shift which corresponds to said hatched area and the degrees of acceleration and deceleration which corresponds to the up and down slopes of the curve are previously stored in the synchronous control circuit SCC as constants, the electronic circuit SCC may form a curve pattern or a pattern of the motor revolution by imputing a desired number of cycle per a time unit e.g. a minute and gives the corresponding command to the reversible servo-motor 45M via the servo-driver SDI.

Now in reference to Fig. 4 which shows movement pattern of the wire array 10 or revolution pattern of the reversible servo-motor 11M. The wire array 10 must be reciprocally moved similar to the slack absorbing zone 40, or rather the latter must be driven similar to the former. When a desired cycle number per minute is inputted in the circuit SCC to form the curve or movement pattern V, the corresponding command is given therefrom to the motor 11M via the servo-driver SDII.

However, the reciprocal forward and backward movements of the sawing wire array 10 must be made differential as referred above in order to renew the wire portion in said cutting wire array zone 10 by feeding a fresh wire portion $W_1$ little by little in lieu of the used wire portion $W_2$ worn by sawing operation. Thus, the movement of the wire array 10 in the cutting zone in one direction must be made larger than that in the other direction by a length X so as to pull new wire portion $W_1$ of said length X thereinto in every one cycle movement. Thus, the command from the circuit SCC to be given to the reversible servo-motor 11M is of such as driving in one direction according to the pattern V but in the other direction according to the pattern W (X + X).

For the convenience of explanation, the movement pattern has been illustrated as a trapezoid, but it is not limited thereto and may be various e.g. a sine curve.

## Claims

1. Wire saw comprising a machine frame; a feed spool (21) and a take-up spool (22) respectively mounted on said machine frame for rotation between which a single continuous wire (W) is extended; a plurality of guide rollers (11, 12, 13) mounted on said machine frame in parallel to one another for rotation, around which said wire (W) is wound a plurality of times to form a wire array (10) which is reciprocally movable forward and backward for cutting a work piece (WP) to be urged thereto; means (40) arranged between said spools (21, 22) and said wire array for absorbing wire slacks to be caused by said cutting movement of the wire array (10); and a reversible motor (11 M) for driving one of said guide rollers (11) to generate reciprocal movement of said wire array (10); said absorbing means (40) being formed by two pairs of pulley assemblies (41a, 41b, 42a, 42b) around each pair of which a fresh wire run ($W_1$) extending from said feed spool (21) to said cutting wire array (10) and a used wire run ($W_2$) extending from said cutting wire array (10) to said take-up spool (22) are respectively wound a plurality of times corresponding to the number of pulleys forming respective assembly (40), one of said each pair of pulley assemblies (41a, 42a) being mounted on said machine frame for rotation, while the other pulley assembly (41b, 42b) of said each pair is adapted to be floatingly movable reciprocally towards and apart from the counterpart stationary pulley assembly (41a, 42a) for absorbing said slacks, characterized in that another reversible motor (45 M) is provided so as to cause said reciprocal movement of said floating pulley assemblies (41b, 42b); that a synchronous control circuit (SCC) is provided so as to control and synchronize said two reversible motors (11 M, 45 M) according to informations on rotation pattern stored therein respectively through a pair of servo-driver means (SD I, SD II); and that said means (40) for absorbing wire slacks comprises a pair of toothed racks (43, 44) each fixed to each of said floating pulley assemblies (41b, 42b) and a pinion (45) arranged between said two toothed racks (43, 44) to meshingly engage therewith and driven by said second reversible motor (45 M) so as to cause reciprocal up and down movement of said floating pulley assemblies (41b, 42b).

2. A wire saw according to Claim 1, characterized in that said informations comprise an additional one necessary for rotating said first reversible motor (11 M) more in one direction than in the other direction so as to pull a length of the fresh wire run ($W_1$) into said cutting wire array (10) in every reciprocal movement thereof to be given through the concerned servo-driver means (SD II).

3. A wire saw according to Claim 1 or 2, characterized in that there are provided a pair of arm levers (31, 32) respectively pivoted on said machine frame for angular movement and having a pulley (33, 34) mounted thereon at the free end for free rotation, each of which is arranged between a pair of idler pulleys, and that each of said fresh and used wire runs ($W_1$, $W_2$) is wound around one of said idler pulleys, said lever pulley (33, 34) and then the other idler pulley so that by providing means (35, 36) for resiliently urging said arm lever (31, 32) said lever pulley (33, 34) is urged to be apart from said idler pulleys, whereby each of said wire runs ($W_1$, $W_2$) is kept in tension.

4. A wire saw according to Claim 3, characterized by providing a pair of detectors (37, 38) so as to detect angular movement of each arm lever (31, 32) and a pair of motors (21 M, 22 M) respectively driving said feed and take-up spools (21, 22) to rotate for supplying fresh wire run ($W_1$) and receiving used wire run ($W_2$) according to informations detected by said detectors (37, 38).

## Revendications

1. Scie à fil comportant un châssis de machine; une bobine débitrice (21) et une bobine réceptrice (22) montées rotatives sur ledit châssis de la machine et entre lesquelles s'étend un fil unique continu (W); une pluralité de rouleaux de guidage (11, 12, 13) montés rotatifs et parallèlement entre eux sur ledit châssis de la machine et autour desquels ledit fil (W) est enroulé une pluralité de fois de manière à former un réseau de fils (10), qui est déplaçable en va-et-vient d'avant en arrière pour découper une pièce à traiter (WP) devant être repoussée contre ce réseau de fils; des moyens (40) disposés entre lesdites bobines (21, 22) et ledit réseau de fils pour supprimer des relâchements du fil pouvant être provoqués par ledit mouvement de découpage exécuté par le réseau de fils (10); et un moteur réversible (11M) servant à entraîner un desdits rouleaux de guidage (11) pour produire un déplacement alternatif dudit réseau de fils (10); lesdits moyens (40) de suppression des relâchements du fil étant formés de deux couples d'ensembles de poulies (41a, 41b, 42a, 42b), autour de chacun desquels un brin de fil neuf ($W_1$), qui s'étend depuis ladite bobine débitrice (21) jusqu'audit réseau de fils de coupe (10), et un brin de fil utilisé ($W_2$), qui s'étend depuis ledit réseau de fils de coupe (10) jusq'à ladite bobine réceptrice (22), sont enroulés respectivement, une pluralité de fois, en fonction du nombre de poulies formant l'ensemble respectif (40), l'un desdits deux ensembles de poulies (41a, 42a) étant monté rotatif sur ledit châssis de la machine, tandis que l'autre ensemble de poulies (41b, 42b) dudit couple d'ensembles est adapté pour être déplaçable à l'état flottant, selon un déplacement alternatif de rapprochement et d'écartement par rapport à l'ensemble fixe correspondant de poulies (41a, 42a), de manière à supprimer lesdits relâchements, caractérisée en ce qu'un autre moteur réversible (45 M) est prévu de manière à provoquer ledit déplacement alternatif desdits ensembles flottants de poulies (41b, 42b); qu'un circuit de commande synchrone (SCC) est prévu de manière à commander et synchroniser lesdits deux moteurs réversibles (11 M, 45 M) en fonction d'informations relatives à un ensemble de rotations mémorisé respectivement dans ce circuit de commande par l'intermédiaire d'un couple de moyens de servocommande (SD I, SD II); et que lesdits moyens (40) servant à supprimer des relâchements du fil comprennent un couple de crémaillères (43, 44), qui sont fixées respectivement auxdits ensembles flottants de poulies (41b, 42b), et un pignon (45) disposé entre lesdites deux crémaillères (43, 44) de manière à engrener avec ces dernières et entraîné par ledit second moteur réversible (45 M) de manière à provoquer un déplacement alternatif ascendant et descendant desdits ensembles flottants de poulies (41b, 42b).

2. Scie à fil selon la revendication 1, caractérisée en ce que lesdites informations comprennent une information additionnelle nécessaire pour faire tourner ledit premier moteur réversible (11 M) d'une manière plus conséquente dans un sens que dans l'autre afin d'introduire une longueur du brin de fil neuf ($W_1$) dans ledit réseau de fils de coupe (10) lors de chaque déplacement alternatif de ce dernier, commandé par les moyens concerné de servocommande (SD II).

3. Scie à fil selon la revendication 1 ou 2, caractérisée en ce qu'il est prévu un couple de leviers en forme de bras (31, 32), respectivement montés pivotants sur ledit châssis de la machine de manière à avoir un déplacement angulaire et sur les extrémités libres desquels sont montées, de manière à pouvoir tourner librement, des poulies respectives (33, 34), dont chacune est disposée entre deux poulies folles, que chacun desdits brins de fil neuf utilisé ($W_1$, $W_2$) est enroulé autour de l'une desdites poulies folles, ladite poulie (33, 34) du levier, puis l'autre poulie folle de sorte que, grâce à la présence de moyens (35, 36) servant à repousser élastiquement ledit levier en forme de bras (31, 32), ladite poulie (33, 34) du levier est écartée desdites poulies folles, ce qui maintient en tension chacun desdits brins de fil (W₁, W₂).

4. Scie à fil selon la revendication 3, caractérisée en ce qu'il est prévu un couple de détecteurs (37, 38) servant à détecter un déplacement angulaire de chaque levier en forme de bras (31, 32) et un couple de moteurs (21 M, 22 M), qui entraînent respectivement lesdites bobines débitrice et réceptrice (21, 22) pour qu'elles tournent de manière à délivrer le brin de fil neuf (W₁) et recevoir le brin de fil utilisé (W₂), en fonction d'informations détectées par lesdits détecteurs (37, 38).

Patentansprüche

1. Drahtseilsäge, umfassend einen Maschinenrahmen; eine zwecks Drehung am genannten Maschinenrahmen montierte Abwickelspule (21) bzw. eine Aufwickelspule (22), zwischen denen ein einzelnes, kontinuierliches Drahtseil (W) verläuft; eine zwecks Drehung parallel zueinander am genannten Maschinenrahmen montierte Vielzahl von Führungsrollen (11, 12, 13), über die das genannte Drahtseil (W) in einer Vielzahl von Windungen verläuft, so daß dadurch eine Drahtseilanordnung (10) entsteht, die sich wechselseitig vorwärts- und zurückbewegen läßt, um so ein ihr zugeführtes Werkstück (WP) schneiden zu können; eine zwischen den genannten Spulen (21, 22) und der genannten Drahtseilanordnung vorgesehene Vorrichtung (40), um damit einen durch die genannte Schneidbewegung der Drahtseilanordnung (10) verursachten Drahtseildurchhang jeweils ausgleichen zu können; sowie einen umschaltbaren Motor (11 M) zum Antrieb einer der genannten Führungsrollen (11), um so eine Wechselbewegung der genannten Drahtseilanordnung (10) zu erzeugen; dabei umfaßt die genannte Ausgleichsvorrichtung (40) zwei Paar Scheibeneinheiten (41a, 41b, 42a, 42b), wobei über jedes dieser Paare eine frische Drahtseilstrecke (W₁), die sich von der genannten Abwickelspule (21) zur genannten Schneidedrahtseilanordnung (10) erstreckt, bzw. eine gebrauchte Drahtseilstrecke (W₂), die sich von der genannten Schneidedrahtseilanordnung (10) zur genannten Aufwickelspule (22) erstreckt, in einer Vielzahl von Windungen entsprechend der Anzahl derjenigen Scheiben, die die entsprechende Einheit (40) bilden, verlaufen, wobei jeweils eine Einheit der genannten Paare von Scheibeneinheiten (41a, 42a) zwecks Drehung am genannten Maschinenrahmen montiert ist, während die andere Scheibeneinheit (41b, 42b) eines jeden der genannten Paare so ausgeführt ist, daß eine ausgleichende Wechselbewegung im Verhältnis zum Gegenstück der stationären Scheibeneinheit (41a, 42a) erfolgen kann, um so jeweils den genannten Drahtseildurchhang auszugleichen, dadurch gekennzeichnet, daß ein weiterer umschaltbarer Motor (45 M) vorgesehen ist, um damit die genannte Wechselbewegung der genannten ausgleichenden Scheibeneinheiten (41b, 42b) zu erzeugen; daß ein Synchronsteuerkreis (SCC) vorgesehen ist, um so die genannten beiden umschaltbaren Motoren (11 M, 45 M) in Übereinstimmung mit darin jeweils gespeicherten Drehmusterinformationen über ein Paar Servoantriebsvorrichtungen (SD I, SD II) steuern und synchronisieren zu können; und daß die genannte Vorrichtung (40) für den Drahtseildurchhangausgleich ein Paar Zahnstangen (43, 44), die jeweils an jeder der genannten ausgleichenden Scheibeneinheiten (41b, 42b) befestigt sind, sowie ein Ritzel (45) umfaßt, das zwischen den genannten beiden Zahnstangen (43, 44) so angeordnet ist, daß es zu einem Ineinandergreifen damit kommt, wobei der Antrieb über den genannten zweiten umschaltbaren Motor (45 M) erfolgt, um so eine auf- und abwärts verlaufende Wechselbewegung der genannten ausgleichenden Scheibeneinheiten (41b, 42b) zu bewirken.

2. Drahtseilsäge gemäß Anspruch 1, dadurch gekennzeichnet, daß die genannten Informationen eine Zusatzinformation umfassen, die erforderlich ist, damit die Drehung des genannten ersten umschaltbaren Motors (11 M) mehr in einer als in der anderen Richtung erfolgt, um so bei jeder über die entsprechende Servoantriebsvorrichtung (SD II) bewirkten Wechselbewegung eine Länge der frischen Drahtseilstrecke (W₁) in die genannte Schneidedrahtseilanordnung (10) zu ziehen.

3. Drahtseilsäge gemäß Anspruch 1 oder 2, dadurch gekennzeichnet, daß ein Paar Armhebel (31, 32) vorgesehen sind, die zwecks Durchführung einer Winkelbewegung jeweils am genannten Maschinenrahmen angelenkt sind und zwecks freier Drehung an ihrem freien Ende jeweils eine Scheibe (33, 34) aufweisen, wobei jede davon zwischen einem Paar Mitläuferscheiben angeordnet ist, und daß jede der genannten frischen und gebrauchten Drahtseilstrecken (W₁, W₂) über eine der genannten Mitläuferscheiben, die genannte Hebelscheibe (33, 34) und anschließend über die andere Mitläuferscheibe verläuft, so daß mit Hilfe der Vorrichtungen (35, 36) für ein federndes Andrücken des genannten Armhebels (31, 32) die genannte Hebelscheibe (33, 34) von den genannten Mitläuferscheiben weggedrückt wird, um so sicherzustellen, daß jede der genannten Drahtseilstrecken (W₁, W₂) unter Spannung bleibt.

4. Drahtseilsäge gemäß Anspruch 3, dadurch gekennzeichnet, daß ein Paar Detektoren (37, 38) vorgesehen sind, um damit die Winkelbewegung eines jeden Armhebels (31, 32) zu ermitteln, und daß ein Paar Motoren (21 M, 22 M) jeweils die genannten Abwickel- und Aufwickelspulen (21, 22) antreiben, um so eine Drehbewegung zu bewirken, damit in Übereinstimmung mit den von den genannten Detektoren (37, 38) ermittelten Informationen eine frische Drahtseilstrecke (W₁) zugeführt und eine gebrauchte Drahtseilstrecke (W₂) aufgenommen werden kann.

Fig.1

# Fig.2

EP 0 261 695 B1

# Fig.3

# Fig.4